(19) Europäisches Patentamt
European Patent Office
Office européen des brevets

(11) EP 1 940 985 B1

(12) # EUROPÄISCHE PATENTSCHRIFT

(45) Veröffentlichungstag und Bekanntmachung des Hinweises auf die Patenterteilung:
**27.02.2013 Patentblatt 2013/09**

(21) Anmeldenummer: **06806990.5**

(22) Anmeldetag: **05.10.2006**

(51) Int Cl.:
***C09D 133/06*** (2006.01) ***C09D 125/14*** (2006.01)
***C09D 167/08*** (2006.01) ***C09D 5/02*** (2006.01)

(86) Internationale Anmeldenummer:
**PCT/EP2006/067063**

(87) Internationale Veröffentlichungsnummer:
**WO 2007/042449 (19.04.2007 Gazette 2007/16)**

(54) **WÄSSRIGE BINDEMITTELZUSAMMENSETZUNG**

AQUEOUS BINDER COMPOSITION

COMPOSITION ADHESIVE AQUEUSE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.10.2005 DE 102005049402**

(43) Veröffentlichungstag der Anmeldung:
**09.07.2008 Patentblatt 2008/28**

(73) Patentinhaber: **BASF SE**
**67056 Ludwigshafen (DE)**

(72) Erfinder:
- **BALK, Roelof**
  **67459 Böhl-iggelheim (DE)**
- **DERSCH, Rolf**
  **67434 Neustadt (DE)**
- **DITTRICH, Uwe**
  **67125 Dannstadt-schauernheim (DE)**

(56) Entgegenhaltungen:
**EP-A2- 0 551 942** **WO-A-97/26303**
**WO-A-99/46337** **DE-A1- 19 826 379**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine wässrige Bindemittelzusammensetzung, die als Komponente in Anstrichmitteln, insbesondere für hochglänzende Anstrichmittel (Hochglanzlacke) verwendet werden kann..

Bindemittel für Anstrichmittel lassen sich üblicherweise in zwei Gruppen einteilen: in lösemittelhaltige Systeme oder Systeme mit Wasser als Lösemittel oder Dispergiermedium.

Zu der ersten Gruppe gehört u.a. der überwiegende Teil der Alkyd-Binder; zu der zweiten gehören u.a. die Acrylat-Dispersionen.

Die erste Gruppe steht zur Zeit aus umweltpolitischen Gründen unter Beschuss und daher wäre eine Umstellung auf wasserbasierende Systeme mit niedrigem Anteil flüchtiger organischer Verbindungen (VOC-Gehalt) wünschenswert.

Die EP 1 382 663 offenbart wasseremulgierbare bzw. wasserverdünnbare Produkte. Die wasserverdünnbaren Öle oder Alkydharze werden mit cyclisch olefinisch ungesättigten Anhydriden umgesetzt.

EP 874 875 offenbart eine Hybridbindemittelzusammensetzung auf Wasserbasis sowie deren Verwendung als Komponente in einer Farb- oder Lackmischung, wobei die Hybridbindemittelzusammensetzung einen Trockengehaltanteil von 60 bis 95 Gew.-% besitzt.

DE 3 427 647 offenbart eine wässrige Beschichtungsmasse aus einem wässrigen Harz und wasserunlöslichen Harzpartikel, wobei das Feststoffgewichtsverhältnis des wässrigen Harzes zu den wasserunlöslichen Harzpartikeln 99/1 - 40/60 beträgt. Verwendet werden die offenbarten Beschichtungsmassen als Einbrennlacke.

Diese Zusammensetzungen des Standes der Technik haben aber den Nachteil, dass sie nicht den gewünschten Anforderungen hinsichtlich Glanz und Oberflächenglätte entsprechen.

Die Aufgabe der Erfindung bestand daher in der Entwicklung einer wässrigen Bindemittelzusammensetzung für Anstrichmittel, insbesondere für Hochglanzlacke sowie deren Herstellung und Formulierung, die sich durch einen sehr hohen Glanz und niedrigen Glanzschleier bei gleichzeitig hoher Deckkraft auszeichnen.

Erfindungsgemäß gelöst wurde die Aufgabe durch eine wässrige Bindemittelzusammensetzung enthaltend

a) mindestens ein Emulsionspolymerisat enthaltend als Monomerbausteine ein $C_1$-$C_8$-Alkyl(meth)acrylat, eine vinylaromatische Verbindung mit bis zu 20 C-Atomen oder Mischungen davon
b) mindestens ein wasserlösliches Alkydharz mit einem gewichtsmittleren Molekulargewicht zwischen 5000 und 40 000 Da, sowie
(c) mindestens ein Alkydharz mit einem gewichtsmittleren Molekulargewicht grösser100 000 Da in Form einer wässrigen Emulsion, dadurch gekennzeichnet, dass der Feststoffgehalt der Mischung aus (a), (b) und (c) kleiner 60 Gew.-% ist.

Weiterhin enthalten bevorzugte Emulsionspolymerisate Verbindungen der allgemeinen Formel I

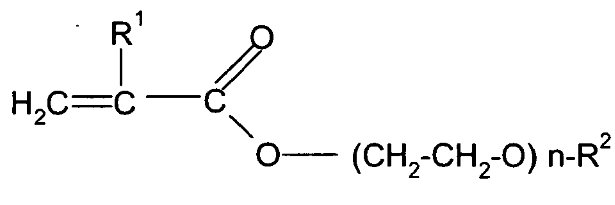

oder II; oder Mischungen davon;

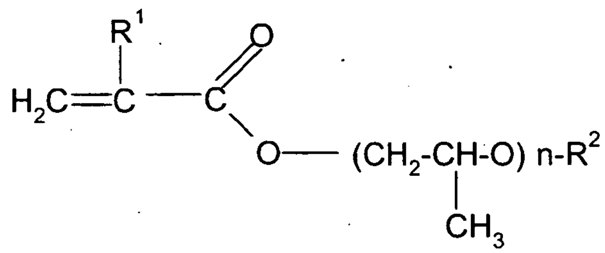

worin $R^1$ für ein H Atom oder eine Methylgruppe, $R^2$ für ein H-Atom oder eine aliphatische oder aromatische Kohlenwasserstoffgruppe mit 1 bis 20 C-Atomen steht und n für eine ganze Zahl von 3 bis 15 steht und besonders bevorzugt von 4 bis 12 steht.
Bevorzugt besteht das Emulsionscopolymerisat (a) insgesamt aus

a) 40 bis 99,5 Gew.-% Hauptmonomeren ausgewählt aus $C_1$-bis $C_8$-Alkyl(meth)acrylaten, vinylaromatischen Verbindungen mit bis zu 20 C-Atomen

b) 0,5 bis 30 Gew.-% Monomeren der Formel I oder II,

c) 0 bis 50 Gew.-% weiteren Monomeren.

Besonders bevorzugt besteht das Emulsionscopolymerisat aus

a) 50 bis 98 Gew.-% Hauptmonomeren,

b) 2 bis 20 Gew.-% Monomeren der Formel I oder II und

c) 0 bis 40 Gew.-% weiteren Monomeren.

Ganz besonders bevorzugt besteht das Emulsionscopolymerisat aus

a) 60 bis 97 Gew.-% Hauptmonomeren,

b) 3 bis 15 Gew.-% Monomeren der Formel I oder II und

c) 0 bis 30 Gew.-% weiteren Monomeren.

Als Hauptmonomere zu nennen sind z.B. $C_1$-$C_8$-Alkyl(meth)acrylate wie Methylmethacrylat, Methylacrylat, n-, iso oder tert.-Butylacrylat, Ethylacrylat und 2-Ethylhexylacrylat..

Insbesondere sind auch Mischungen der Alkyl(meth)acrylate geeignet.

Als vinylaromatische Verbindungen kommen Vinyltoluol, $\alpha$- und p-Methylstyrol, $\alpha$-Butylstyrol, 4-n-Butylstyrol, 4-n-Decylstyrol und vorzugsweise Styrol in Betracht.

Bevorzugte Hauptmonomere sind die Alkyl(meth)acrylate, insbesonders die $C_1$-$C_8$-Alkyl(meth)acrylate, vinylaromatische Verbindungen mit bis zu 20 C-Atomen, insbesondere Styrol und Mischungen der vorstehenden Monomeren.

Weitere Monomere sind z.B. Hydroxylgruppen enthaltende Monomere, insbesondere $C_1$-$C_{10}$-Hydroxyalkyl(meth)acrylate, (Meth)acrylamid, ethylenisch ungesättigte Säuren, insbesondere Carbonsäuren, wie (Meth)acrylsäure oder Itaconsäure, und deren Anhydride, Dicarbonsäuren und deren Anhydride oder Halbester, z.B. Maleinsäure, Fumarsäure und Maleinsäureanhydrid.

Das Emulsionscopolymerisat hat vorzugsweise eine Glasübergangstemperatur Tg kleiner 50°C, bevorzugt kleiner 40°C, besonders bevorzugt kleiner 30°C.

Unter der Glasübergangstemperatur $T_G$ wird hier die gemäß ASTM D 3418-82 durch Differentialthermoanalyse (DSC) ermittelte "mid-point temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Nach Fox (siehe Ullmanns Enzyklopädie der technischen Chemie, 4. Auflage, Band 19, Weinheim (1980), S. 17, 18) kann man die Glasübergangstemperatur $T_G$ abschätzen. Es gilt für die Glasübergangstemperatur von schwach bzw. unvernetzten Mischpolymerisaten bei großen Molmassen in guter Näherung:

$$\frac{1}{Tg} = \frac{X^1}{Tg^1} + \frac{X^2}{Tg^2} + \ldots\ldots \frac{X^n}{Tg^n}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J..Brand-rup, E.H. Immergut, Polymer Handbook 3rd ed, J. Wiley, New York 1989 bekannt.

Die volumenmittlere Teilchengröße (nach Hydrodynamischer Fraktionierung (HDF), beschrieben in G.R. McGowan, M.A. Langhorst, J. Coll. And Interface Sci. 89, 1 (1982) 92-104) des Emulsionspolymerisates (a) beträgt < 500 nm, bevorzugt < 200 nm und besonders bevorzugt < 100 nm.

Unter einem Alkydharz.versteht man einen Polyester, der mit einem trocknenden Öl, einer Fettsäure oder dergleichen verestert ist (U. Poth, Polyester und Alkydharze, Vincentz Network 2005).

Unter dem Alkydharz (b) versteht man eine, gegebenenfalls nach Neutralisation, wasserverdünnbare Alkydharzlösung basierend auf einem Alkydharz mit ausreichend hoher Säurezahl, vorzugsweise 30-65 mg KOH/g Alkydharz fest, und einem gewichtsmittleren Molekulargewicht von > 5000 und < 40000 Da, bevorzugt > 8000 und < 35000 Da und besonders bevorzugt > 10000 und < 35000 Da.

Das Alkydharz (c) ist eine wässrige Alkydemulsion. mit einer volumenmittleren Teilchengröße (nach hydrodynamischer Fraktionierung) < 200 nm, vorzugsweise < 100 nm und einem gewichtsmittlerem Molekulargewicht > 100000 Da, insbesondere > 500000 Da.

Komponente (c) ist vollständig löslich in organischen Lösemitteln, wie z.B. THF (Tetrahydrofuran) und bei Raumtemperatur filmbildend.

Unter den Alkydharzen (b) versteht man beispielsweise die Produkte WorleeSol® 61 A, WorleeSol® 61 E, WorleeSol® 65A, Synthalat® W 46 oder Synthalat® W48. Vorteilhaft wird Synthalat® W 46 oder Synthalat® W48 eingesetzt.

Unter der Komponente (c) versteht man beispielsweise das Alkydharz WorleeSol® E 150 W.

Die Herstellung des Emulsionscopolymerisats kann in bekannter Weise durch Emulsionspolymerisation erfolgen.

Bei der Emulsionspolymerisation werden üblicherweise ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; $C_8$- bis $C_{36}$), ethoxylierte Mono-, Di- und Tri-Alkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$- bis $C_{18}$), von Alkylarylsulfonsäuren (Alkylrest: $C_9$- bis $C_{18}$) und von Sulfaten ethoxylierter Fettalkohole.

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die Menge der Initiatoren beträgt im allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 150, vorzugsweise 50 bis 95°C: Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat

vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren kann auch nach Ende der eigentlichen Emulsionspolymerisation, d.h. nach einem Umsatz der Monomeren von mindestens 95 %, Initiator zugesetzt werden. Üblicherweise werden Red-Ox-Systeme eingesetzt. Im Anschluss kann auch eine physikalische Desodorierung durchgeführt werden.

Es wird eine wässrige Polymerdispersion erhalten, welche üblicherweise einen Polymergehalt (Festgehalt) von 20 bis 70 Gew.-%, vorzugsweise 40 bis 60 Gew.-%, bezogen auf die Polymerdispersion aufweist.

Das Polymerisat (a) wird mit den Komponenten (b) und (c) entweder einzeln oder vorgemischt als Bindemittelzusammensetzung in die Farb- oder Lackmischung gegeben.

Der Anteil der Komponente (b) (gerechnet Alkydharz fest auf Gesamtbindemittel fest) liegt zwischen 10 und 35, vorzugsweise zwischen 18 und 25 %. Das Verhältnis von Komponente (a) zu Komponente (c) liegt zwischen 1 : 9 und 9 : 1, bevorzugt zwischen 3 :7 und 7 : 3, insbesonders bevorzugt zwischen 4 :6 und 6 : 4.

Durch Additivierung - Zugabe eines Photoinitiators oder Sikkativierung kann eine Oberflächenvernetzung erzeugt werden.

Als Photoinitiatoren kommen solche infrage, die durch Sonnenlicht angeregt werden, beispielsweise Benzophenon oder Benzophenonabkömmlinge. Zur Sikkativierung eignen sich die für wässrige Alkydharze empfohlenen Metallverbindungen, beispielsweise auf Basis von Co oder Mn (Überblick in U.Poth, S 183 f).

Das Anstrichmittel enthält weiterhin ein Pigment. Als Pigment werden zusammenfassend alle Pigmente und Füllstoffe, z.B. Farbpigmente, Weißpigmente und anorganische Füllstoffe bezeichnet.

Genannt seien anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Auch synthetische Weißpigmente mit Lufteinschlüssen zur Erhöhung der Lichtstreuung können eingesetzt werden. Beispiele sind die Rhopaque™-Dispersionen.

Geeignete Füllstoffe sind z.B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Für die erfindungsgemäßen glänzenden Anstrichmittel sind allenfalls geringe Mengen sehr feinteiliger Füllstoffe akzeptabel. Vorzugsweise wird auf den Einsatz von Füllstoffen verzichtet.

Der Anteil der Pigmente kann durch die Pigmentvolumenkonzentration (PVK), d.i. der Quotient aus Volumen der Pigmente zum Gesamtvolumen des getrockneten Anstrichmittels, beschrieben werden. Die erfindungsgemäßen Hochglanzlacke haben eine PVK im Bereich vön 12 bis 35 %, vorzugsweise 15 bis 30 %.

Das erfindungsgemäße wässrige Anstrichmittel kann neben dem Polymeren und Pigment weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Genannt seien weiter Verlaufsmittel, Entschäumer, Biozide, und Verdicker.

Als Verdicker in Betracht kommen z.B. Assoziativverdicker.Bevorzugte Assoziativverdicker sind Polyurethanverdicker. Die Menge des Verdickers beträgt vorzugsweise weniger als 1 Gew.-%, besonders bevorzugt weniger als 0,6 Gew.-% Verdicker fest auf Anstrichmittel.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d.h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel fest, Pigment und Hilfsmittel fest. Bei den flüchtigen Bestandteilen handelt es sich vorwiegend um Wasser.

Vorzugsweise handelt es sich bei dem Anstrichmittel um ein hochglänzendes Anstrichmittel.

Die Bestimmung des Glanzes des Anstrichmittels erfolgt nach DIN 67530: Das Anstrichmittel wird mit 240 μm Spaltweite auf eine Glasplatte aufgetragen und 72 Stunden lang bei Raumtemperatur getrocknet. Der Prüfkörper wird in ein kalibriertes Reflektometer eingesetzt, und bei definiertem Einfallswinkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Der Glanz der Hochglanzlacke ist vorzugsweise größer 60 bei 20° und größer 80 bei 60°.

Der Reflektometerwert wird bestimmt bei 23°C und dimensionslos angegeben in Abhängigkeit vom Einfallswinkel, z.B. 40 bei 20°.

Das erfindungsgemäße Anstrichmittel kann in üblicher Weise auf Substrate aufgebracht werden, z.B. durch Streichen, Spritzen, Tauchen, Rollen, Rakeln etc.

Es wird vorzugsweise als Bäutenanstrichmittel, d.h. zum Beschichten von Gebäuden oder Gebäudeteilen verwendet. Es kann sich dabei um mineralische Untergründe wie Putze , Gips- oder Gipskartonplatten Mauerwerk oder Beton, um Holz, Holzwerkstoffe, Metall oder Papier, z.B. Tapeten oder Kunststoff, z.B. PVC handeln.

Die erfindungsgemäßen Anstrichmittel zeichnen sich aus durch einfache Handhabung, gute Verarbeitungseigenschaften, hohes Deckvermögen und vor allem hohen Glanz. Die Anstrichmittel sind schadstoffarm. Das verwendete Arbeitsgerät lässt sich leicht mit Wasser reinigen.

Beispiele

Dispersion I

In einem mit Dosiereinrichtung und Temperaturregelung ausgerüstetem Polymerisationsgefäß wurden vorgelegt:

| | | |
|---|---|---|
| Vorlage : | 528,0 g | Wasser |
| | 46,7 g | einer Polystyrolsaatdispersion mit einem Feststoffgehalt von 33% und einer mittleren Teilchengröße von 30 nm |
| | 3,67 g | einer 15%igen wässrigen Lösung von Natriumlaurylsulfat |

und unter Rühren auf 85°C erhitzt. Anschließend wurde, unter Aufrechterhaltung dieser Temperatur 5% von Zulauf 2 zugegeben und 5 min gerührt. Danach wurde Zulauf 1 in 180 min zudosiert und parallel dazu die Restmenge von Zulauf 2 in 195 min.

| | | |
|---|---|---|
| Zulauf 1: | 543,2 g | Wasser |
| | 125,4 g | einer 15%igen wässrigen Lösung von Natriumlaurylsulfat |
| | 458,0 g | n-Butylacrylat |
| | 399,6 g | Methylmethacrylat |
| | 165,1 g | Styrol |
| | 22,78 g | Methacrylsäure |
| | 21,45 g | Ureidomethacrylat |
| | 33,0 g | Bisomer MPEG 350 MA (der Fa. Laporte Performance Chemicals UK) |

| | | |
|---|---|---|
| Zulauf 2: | 83,6 g | Wasser |
| | 4,4 g | Natriumperoxodisulfat |

Beim Beenden von Zulauf 1 wurde 22 g Wasser zugegeben; beim Beenden von Zulauf 2 wurde anschließend 30 min nachpolymerisiert und mit 7,47 g Ammoniak (als 25%ige wässrige Lösung) neutralisiert. Danach wurde 13,2 g Wasserstoffperoxid (als 5%ige wässrige Lösung) zugegeben und eine Lösung von 0,557 g Ascorbinsäure in 4,96 g Wasser in 60 min zudosiert.

Anschließend wurde die Dispersion abgekühlt und filtriert über ein 125 μm Filter. Es wurde 2,48 kg einer 46%igen Dispersion erhalten.

Dispersion II

In einem mit Dosiereinrichtung und Temperaturregelung ausgerüstetem Polymerisationsgefäß wurden vorgelegt:

| | | |
|---|---|---|
| Vorlage: | 286 g | Wasser |
| | 47,7 g | einer Polystyrolsaatdispersion mit einem Feststoffgehalt von 33% und einer mittleren Teilchengröße von 30 nm |

und unter Rühren auf 82°C aufgeheizt. Bei dieser Temperatur wurde 25% des Zulaufs 2 zugegeben und weitere 5 min gerührt. Dann wurde Zulauf 1 und die Restmenge von Zulauf 2 unter Beibehaltung von 82°C in 180 min zudosiert

| | | |
|---|---|---|
| Zulauf 1: | 519 g | Wasser |
| | 55,0 g | eines Fettalkoholethoxylats, Ethoxylierungsgrad ca. 30 (als 20%-ige wässrige Lösung) |
| | 73,3 g | eines Natrium-$C_{12/14}$-Alkylpolyglycolethersulfats, Ethoxylie-rungsgrad ca. 30 (als 30%-ige wässrige Lösung) |
| | 37,4 g | Acrylamid (als 50%ige wässrige Lösung) |
| | 32,9 g | Acrylsäure |
| | 503 g | Styrol |
| | 545 g | n-Butylacrylat |

| | | |
|---|---|---|
| Zulauf 2: | 29,2 g | Wasser |
| | 2,2 g | Natriumperoxodisulfat |

Nach Zulaufende wurde 32 g Wasser zugegeben und weitere 15 min polymerisiert. Anschließend wurde 7,95 g Ammoniak (als 25%ige wässrige Lösung) zugegeben und es wurde Zulauf 3 und 4 parallel in 60 min zudosiert.

| | | |
|---|---|---|
| Zulauf 3: | 11,1 g | t-Butylhydroperoxid (als 10%ige wässrige Lösung) |

| | | |
|---|---|---|
| Zulauf 4: | 33,1 g | Wasser |
| | 0,684 g | Ascorbinsäure |

Dann wurde 9,5 g Wasserstoffperoxid (als 5%ige wässrige Lösung), 13,4 g Ammoniak (als 25%ige wässrige Lösung) und 6,1 g Wasser zugegeben und es wurde 60 min bei 80°C nachgerührt. Anschließend wurde die Dispersion abgekühlt und über ein 125 μm Filter abfiltriert. Es wurde 2300 g einer 50,5%ige Dispersion erhalten.

Die in den wässrigen Lacken eingesetzten Hybride wurden wie folgt hergestellt:

Hybrid I

Zu der Vorlage aus 27,5 g WorleeSol® E 150 wurden unter Rühren 27,5 g Dispersion I gegeben.

Hybrid II

In die Vorlage aus 16,9 g Synthalat® W 46 gibt man unter Rühren 55 g Hybrid I.

Hybrid III

Zu der Vorlage aus 41,2 g WorleeSol® E 150 W gibt man unter Rühren 13,8 g Dispersion I.

Hybrid IV

Zu der Vorlage aus 13,8 g WorleeSol® E 150 W gibt man unter Rühren 41,2 g Dispersion I.

Hybrid V

Zu der Vorlage aus 5,5 g WorleeSol® E 150 W gibt man unter Rühren 49,5 g Dispersion I.

Hybrid VI

Zu der Vorlage aus 27,5 g WorleeSol® E 150 W gibt man unter Rühren 27,5 g auf 40 % verdünnte Dispersion II.

Hybrid VII

Zu der Vorlage aus 27,5 g Synthalat® AEM 700 TC gibt man unter Rühren 27,5 g Dispersion I.

Die Komponenten der Hybride und sonstige in den Beispielen eingesetzte Bindemittel sind in den nachfolgenden Tabellen mit Hersteller und Eigenschaften gelistet.

Tabelle 1.1

| Name | Hersteller | Festgehalt/ % | Säurezahl* mg KOH/g fest | Mw** |
|---|---|---|---|---|
| Resydrol® AS 894 w | Cytec Surface Specialties, Graz | 88-92 | 45,2 | 1720 |
| Resydrol®l VAL 5547 w | Cytec Surface Specialties, Graz | 96-100 | 46,8 | 2840 |
| Synthalat® W 46 | Synthopol Chemie, Buxtehude | 39-41 | 59 | 18100 |
| Synthalat® W 48 | Synthopol Chemie, Buxtehude | 35-37 | 55,8 | 21300 |
| WorleeSol®· 61 A | Worlee-Chemie GmbH, Lauenburg | 73-77 | 41,3 | 14800 |
| WorleeSol® 61 E | Worlee-Chemie GmbH, Lauenburg | 73-78 | 41,4 | 17600 |
| WorleeSol® 65 A | Worlee-Chemie GmbH, Lauenburg | 68-72 | 37 | 30900 |
| *DIN EN ISO 2114 umgerechnet auf Bindemittel fest<br>**Gewichtsmittel, Größenausschlusschromatographie (SEC) | | | | |

Tabelle 1.2

| Name | Hersteller | Festgehalt/% | Mw* | Teilchengröße**/nm |
|---|---|---|---|---|
| Synthalat® AEM 700 TC | Synthopol, Buxtehude | 53-57 | 6400 | 471 |
| WorleeSol® E 150 W | Worlee Chemie GmbH, Lauenburg | 38-42 | 1060000 | 61 |
| *Gewichtsmittel, Größenausschlusschromatographie (SEC)<br>**volumetrisches Mittel, bestimmt nach hydrodynamischer Fraktionierung (HDF) | | | | |

Tabelle 1.3

| Name | Festgehalt/% | MFT*/°C | Teilchengröße**/nm |
|---|---|---|---|
| Dispersion II | 49-51 | 20 | 168 |

(fortgesetzt)

| Name | Festgehalt/% | MFT*/°C | Teilchengröße**/nm |
|---|---|---|---|
| Dispersion I | 45-47 | 21 | 85 |
| *Mindestfilmbildetemperatur (DIN ISO 2115)<br>**volumetrisches Mittel, bestimmt nach hydrodynamischer Fraktionierung (HDF) | | | |

Tabelle 2

| Name | Funktion | Hersteller |
|---|---|---|
| Disperbyk® 190 | Dispergiermittel | Byk-Chemie GmbH, Wesel |
| Byk® 020 | Entschäumer | Byk-Chemie GmbH, Wesel |
| Efka®-4550 | Dispergiermittel | Efka-Additives B.V., Heerenveen, Niederlande |
| DSX 2000 und DSX 1514 | Verdicker | Cognis Deutschland GmbH&Co.KG, Düsseldorf |
| Collacral® LR 8990 | Verdicker | BASF AG, Ludwigshafen |
| Kronos® 2190 | Titandioxidpigment | Kronos Titan GmbH, Leverkusen |
| Acrysol® RM8 und RM 2020 | Verdicker | Rohm&Haas Deutschland GmbH, Frankfurt |

Herstellung der wässrigen Lacke

Die einzelnen Komponenten (Herstellemachweis s. Tabelle 1 und 2) wurden in der Menge (Gewichtsteile) und Reihenfolge, wie in den folgenden Tabellen angegeben, unter Rühren mit einem Zahnscheibenrührer zudosiert. Nach Zugabe des Titandioxidpigmentes wurde die Drehzahl erhöht auf 2000 Upm und solange dispergiert bis die Pigmentpaste glatt, d.h. frei von Klümpchen, war. Dann ließ man, falls erforderlich abkühlen auf Raumtemperatur und gab die restlichen Komponenten bei reduzierter Drehzahl zu.

Prüfung der wässrigen Lacke

Die wässrigen Lacke wurden durch Messung von Viskositäten (bei 2 Schergeschwindigkeiten) und Glanz charakterisiert. Dazu wurden Filme mit einem Kastenrakel (240 $\mu$m Spalthöhe) auf Glasplatten aufgezogen und 3 Tage im Normklima (23°C, 50 % rel. Feuchte) getrocknet. Zur Beschreibung des visuellen Glanzeindrucks wurden der Glanz nach DIN und der Glanzschleier (Haze) bestimmt. Der Glanzschleier ist ein Maß für die diffuse Reflektion, die sich beim Spiegeln eines Objektes in der Lackoberfläche als ein milchiges Spiegelbild zu erkennen gibt. Hochglänzende Oberflächen zeichnen sich durch hohe Glanzwerte insbesondere bei der empfindlicheren 20 °-Geometrie und niedrige Hazewerte aus.

Tabelle 3.1

| | 1 | 2 | 3 | 4 | 5 | Glasurit Weißlack, wasserverdünnbar, Hochglanz | Glasurit Buntlack EA, Kunstharzbasis, Hochglanz (weiß) |
|---|---|---|---|---|---|---|---|
| Synthalat® W 48, 37 %ig | 18,2 | | | | | | |
| Synthalat® W 46, 40 %ig | | 16,9 | | | | | |
| WorleeSol® 65 A, 70 %ig | | | | | 9,6 | | |
| Wasser | 7 | 7 | 7,9 | 7,9 | 6,4 | | |
| Disperbyk® 190 | | | 2,5 | 2,5 | | | |

(fortgesetzt)

| | 1 | 2 | 3 | 4 | 5 | Glasurit Weißlack, wasserverdünnbar, Hochglanz | Glasurit Buntlack EA, Kunstharzbasis, Hochglanz (weiß) |
|---|---|---|---|---|---|---|---|
| Ammoniak, 25 % | 0,4 | 0,4 | | | 0,4 | | |
| Efka® 4550 | 0,5 | 0,5 | | | 0,5 | | |
| Byk® 020 | 0,5 | 0,5 | 0,5 | 0,5 | 0,5 | | |
| DSX2000/1514 (Verhältnis 1:0,3) | | | 1,3 | | | | |
| Collacral® LR 8990, 40 %ig | | | | 1,3 | | | |
| Propylenglykol | 1,3 | 1,3 | | | 1,3 | | |
| Kronos 2190 | 25 | 25 | 25 | 25 | 25 | | |
| 15 min bei 2000 Upm dispergieren | | | | | | | |
| WorleeSol® 61 E, 75 %ig | | | 9 | | | | |
| Ammoniak, 4 %ig | | | 2,5 | | | | |
| Propylenglykol | 1 | 1 | 2,3 | 2,3 | 1 | | |
| Hybrid I, 43 %ig | 55 | 55 | 55 | | 55 | | |
| Hybrid II, | | | | 71,9 | | | |
| Acrysol® RM2020/RM8 (Verhältnis 1:0,3) | 1,6 | 1,6 | | | 0,7 | | |
| Wasser | | | 5,3 | | 2 | | |
| | 110,5 | 109,2 | 111,3 | 111,4 | 102,4 | | |
| | | | | | | | |
| Prüfungen | | | | | | | |
| | | | | | | | |
| Viskosität (ENISO 3219)/mPas | | | | | | | |
| bei 102 1/s | 1140 | 1160 | 2770 | 1970 | 2070 | | |
| bei 4390 1/s | 205 | 204 | 179 | 137 | 236 | | |
| | | | | | | | |
| Film auf Glas, 240 µm, 3 d R.T. | | | | | | | |
| Glanz* | | | | | | | |
| bei 60 ° | 82 | 86 | 89 | 87 | 92 | 88 | 88 |
| bei 20 ° | 65 | 74 | 80 | 78 | 84 | 63 | 78 |
| Haze (Glanzschleier)* | 142 | 45 | 3 | 8 | 81 | 120 | 19 |
| * gemessen mit dem haze-gloss-Gerät von Byk-Gardner, Geretsried | | | | | | | |

Die Beispiele 1 bis 5 zeigen, dass man mit den erfindungsgemäßen wässrigen Lacken das Glanzniveau von lösemittelbasierenden Alkydharzlacken (Beispiel Glasurit® EA) erreicht. Dasjenige von handelsüblichen Dispersionslacken (Beispiel Glasurit® Weißlack, wasserverdünnbar) wird weit übertroffen. Die 3 primären Bindemittelkomponenten können dabei teilweise oder wie in Beispiel 4 komplett vorgemischt eingesetzt werden.

Tabelle 3.2.

| | 6 | 7 | 8 | 9 | 10 | 11 |
|---|---|---|---|---|---|---|
| WorleeSol® 61 A, 75 %ig | 9 | 9 | 9 | 9 | 9 | 9 |
| Ammoniak, 25 %ig | 0,4 | 0,4 | 0,4 | 0,4 | 0,4 | 0,4 |
| Efka® 4550 | 0,5 | 0,5 | 0,5 | 0,5 | 0,5 | 0,5 |
| Byk® 020 | 0,5 | 0,5 | 0,5 | 0,5 | 0,5 | 0,5 |
| Wasser | 7 | 7 | 7 | 7 | 7 | 7 |
| Propylenglykol | 1,3 | 1,3 | 1,3 | 1,3 | 1,3 | 1,3 |
| Kronos® 2190 | 25 | 25 | 25 | 25 | 25 | 25 |
| 15 min bei 2000 Upm dispergieren, abkühlen lassen | | | | | | |
| Propylenglykol | 1 | 1 | 1 | 1 | 1 | 1 |
| Hybrid I | 55 | | | | | |
| Hybrid III | | 55 | | | | |
| Hybrid IV | | | 55 | | | |
| Hybrid V | | | | 55 | | |
| Hybrid VI | | | | | 55 | |
| Dispersion II, 40 %ig | | | | | | 55 |
| RM2020/RM8 (Verhältnis 1:0,3) | 0,7 | 0,7 | 1,4 | 1,4 | 1 | 1 |
| Wasser | 2 | 2 | 2 | 2 | 2 | 2 |
| | 102,4 | 102,4 | 103,1 | 103,1 | 102,7 | 102,7 |
| Prüfungen | | | | | | |
| Viskosität (ENISO 3219)/mPas | | | | | | |
| Bei 102 1/s | 2220 | 2560 | 3580 | 2690 | 1970 | 487 |
| bei 4390 1/s | 262 | 294 | 279 | 367 | 296 | 136 |
| Film auf Glas, 240 μm, 3d R.T. Glanz | | | | | | |
| bei 60 ° | 91 | 88 | 87 | 87 | 90 | 94 |
| be 20 ° | 81 | 78 | 72 | 86 | 75 | 77 |
| Haze | 13 | 14 | 82 | 89 | 53 | 89 |

In den Beispielen 6 bis 9 wurde das Verhältnis Alkydemulsion zu Acrylatdispersion variiert. Ein reduzierter Anteil der Alkydemulsion wirkte sich in niedrigeren Glanzwerten und vor allem erhöhtem Haze (Glanzschleier) aus.

In Beispiel 10 wurde die Acrylatkomponente Dispersion I durch die Dispersion II ersetzt. Auch hiermit wurde ein hoher Glanz erreicht, der Haze war aber nicht ganz so niedrig wie mit Hybrid I. Mit Dispersion II allein (Beispiel 11), d.h. ohne Alkydemulsion stieg der Haze weiter an.

Tabelle 3.3.

| | 12 | 13 | 14 |
|---|---|---|---|
| Resydrol® VAL 5547 w, 98 %ig | 6,9 | | |
| Resydrol® AS 894, 90 %ig | | 7,5 | |
| Ammoniak, 25 %ig | 0,4 | 0,4 | |
| Efka® 4550 | 0,5 | 0,5 | |
| Disperbyk® 190 | | | 2,5 |
| Byk® 020 | 0,5 | 0,5 | 0,5 |
| Wasser | 7. | 7 | 7,9 |
| DSX2000/1514 (Verhältnis 1:0,3) | | | 1,3 |
| Propylenglykol | 1,3 | 1,3 | |

(fortgesetzt)

| | 12 | 13 | 14 |
|---|---|---|---|
| Kronos 2190 | 25 | 25 | 25 |
| 15 min bei 2000 Upm dispergieren, abkühlen lassen | | | |
| Propylenglykol<br>WorleeSol® 61 E, 75 %ig<br>Ammoniak, 4 %ig<br>Hybrid I<br>Hybrid VII<br>RM2020/RM8 (Verhältnis 1:0,3) | 1<br><br><br>55<br><br>0,7<br>98,3 | 1<br><br><br>55<br><br>0,7<br>98,9 | 2,3<br>9<br>2,5<br><br>55<br><br>106 |
| Prüfungen<br>Viskosität (ENISO 3219)/mPas<br>bei 102 1/s<br>bei 4390 1/s<br>Film auf Glas, 240 μm, 3d R.T. Glanz<br>bei 60 °<br>bei 20°<br>Haze | <br><br>542<br>146<br><br>72<br>29<br>363 | <br><br>1750<br>205<br><br>37<br>9<br>251 | <br><br>1480<br>523<br><br>74<br>31<br>338 |

Die Vergleichsbeispiele 12 bis 14 demonstrieren den Einfluss nicht erfindungsgemäßer Alkydkomponenten: Jn allen 3 Fällen resultierten niedrige Glanzwerte und extrem hoher Haze. Die Lacke erschienen auch visuell nur noch seidenglänzend oder gar seidenmatt.

## Patentansprüche

**1.** Wässrige Bindemittelzusammensetzung enthaltend

a) mindestens ein Emulsionspolymerisat enthaltend als Monomerbausteine ein $C_1$-$C_8$-Alkyl(meth)acrylat, eine vinylaromatische Verbindung mit bis zu 20 C-Atomen oder Mischungen davon
b) mindestens ein wasserlösliches Alkydharz mit einem gewichtsmittleren Molekulargewicht zwischen 5000 und 40 000 Da, sowie
c) mindestens ein Alkydharz mit einem gewichtsmittleren Molekulargewicht grösser 100 000 Da in Form einer wässrigen Emulsion, **dadurch gekennzeichnet, dass** der Feststoffgehalt der Mischung aus (a), (b) und (c) kleiner 60 Gew.-% ist.

**2.** Wässrige Bindemittelzusammensetzung gemäß Anspruch 1, **dadurch gekennzeichnet, dass** das Alkydharz (b) eine Säurezahl zwischen 30 und 65 mg KOH/g aufweist.

**3.** Wässrige Bindemittelzusammensetzung gemäß Anspruch 1 oder 2, **dadurch gekennzeichnet, dass** die vinylaromatischen Verbindungen ausgewählt sind aus der Gruppe Vinyltoluol, α- und p-Methylstyrol, α-Butylstyrol, 4-n-Butylstyrol, 4-n-Decylstyrol oder Styrol.

**4.** Wässrige Bindemittelzusammensetzung gemäß Anspruch 3, **dadurch gekennzeichnet, dass** das $C_1$-$C_8$-Alkyl(meth)acrylat ausgewählt ist aus der Gruppe Methylmethacrylat, n-, iso- oder tert,-Butylacrylat, Ethylacrylat oder 2-Ethylhexylacrylat oder Mischungen davon.

**5.** Wässrige Bindemittelzusammensetzung gemäß einem der Ansprüche 1 bis 4, **dadurch gekennzeichnet, dass** das Emulsionspolymerisat (a)

(i) 3 bis 15 Gew.-% Monomere der Formel I

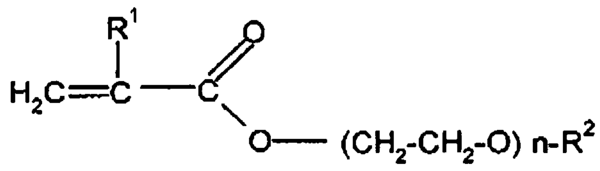

oder 11

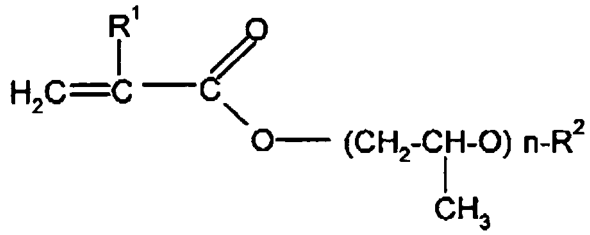

oder Mischungen davon enthält,

worin $R^1$ für ein H Atom oder eine Methylgruppe, $R^2$ für ein H-Atom oder eine aliphatische oder aromatische Kohlenwasserstoffgruppe mit 1 bis 20 C-Atomen steht und n für eine ganze Zahl von 3 bis 15 steht

(ii) 40 bis 97 Gew.-% eines $C_1$-$C_8$-Alkyl(meth)acrylates, einer vinylaromatischen Verbindung mit bis zu 20 C-Atomen oder deren Mischungen und

(iii) 0 bis 50 Gew.-% weitere Monomere enthält.

**6.** Wässrige Bindemittelzusammensetzung gemäß Anspruch 5, **dadurch gekennzeichnet, dass** $R^2$ für eine $C_1$- bis $C_4$-Alkylgruppe steht.

**7.** Wässrige Bindemittelzusammensetzung gemäß einem der Ansprüche 1 bis 4, **dadurch gekennzeichnet, dass** die Glasübergangstemperatur des Emulsionscopolymerisates (a) kleiner 50°C ist.

**8.** Wässrige Bindemittelzusammensetzung gemäß einem der Ansprüche 1 bis 7, **dadurch gekennzeichnet, dass** die volumenmittlere Teilchengröße der Komponente (c) < 200 nm beträgt.

**9.** Wässrige Bindemittelzusammensetzung gemäß einem der Ansprüche 1 bis 9, **dadurch gekennzeichnet, dass** die volumenmittlere Teilchengröße der Komponente (a) < 500 nm beträgt.

**10.** Wässrige Bindemittelzusammensetzung gemäß einem der Ansprüche 1 bis 10, **dadurch gekennzeichnet, dass** der Anteil an Komponente (b) bezogen auf das Gesamtbindemittel zwischen 10 und 35 % (gerechnet Alkydharz fest auf Gesamtbindemittel fest) liegt.

**11.** Wässrige Bindemittelzusammensetzung gemäß einem der Ansprüche 1 bis 11, **dadurch gekennzeichnet, dass** das Verhältnis von Komponente (c) zu Komponente (a) zwischen 1:9 und 9:1 (gerechnet Alkydharz fest zu Emulsionspolymerisat fest) liegt.

**12.** Verwendung der Bindermittelzusammensetzung gemäß einem der Ansprüche 1 bis 12, als Komponente in Anstrichmitteln.

**13.** Verwendung der Bindemittelzusammensetzung gemäß einem der Ansprüche 1 bis 12, als Komponente in Hochglanzlacken.

**14.** Anstrichmittel enthaltend eine Bindemittetzusammensetzung gemäß einem der Ansprüche 1 bis 12.

**15.** Anstrichmittel gemäß Anspruch 15, **dadurch gekennzeichnet, dass** es sich um einen Hochglanzlack mit einem Glanz größer 60 bei 20° (° ist Einfallswinkel) handelt.

## Claims

1. An aqueous binder composition comprising

a) at least one emulsion polymer comprising as monomer units a $C_1$-$C_8$ alkyl (meth)acrylate, a vinylaromatic compound having up to 20 carbon atoms or mixtures thereof,
b) at least one water-soluble alkyd resin having a weight-average molecular weight of between 5000 and 40 000 Da, and
c) at least one alkyd resin having a weight-average molecular weight of more than 100 000 Da in the form of an aqueous emulsion, wherein the solids content of the mixture of (a), (b), and (c) is less than 60% by weight.

2. The aqueous binder composition according to claim 1, wherein the alkyd resin (b) has an acid number of between 30 and 65 mg KOH/g.

3. The aqueous binder composition according to claim 1 or 2, wherein the vinyl aromatic compounds are selected from the group consisting of vinyltoluene, α- and p-methylstyrene, α-butylstyrene, 4-n-butylstyrene, 4-n-decylstyrene, and styrene.

4. The aqueous binder composition according to claim 3, wherein the $C_1$-$C_8$ alkyl (meth)acrylate is selected from the group consisting of methyl methacrylate, n-butyl, isobutyl, and tert-butyl acrylate, ethyl acrylate, and 2-ethylhexyl acrylate, and mixtures thereof.

5. The aqueous binder composition according to any one of claims 1 to 4, wherein the emulsion polymer (a) comprises

(i) 3 to 15% by weight of monomers of the formula I

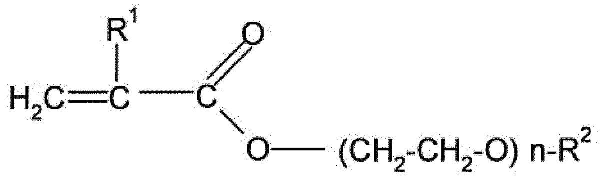

or II

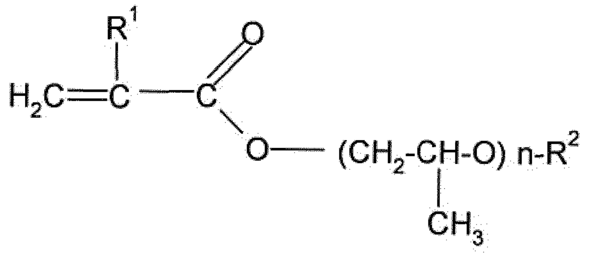

or mixtures thereof,
in which $R^1$ is a hydrogen atom or a methyl group, $R^2$ is a hydrogen atom or an aliphatic or aromatic hydrocarbon group having 1 to 20 carbon atoms, and n is an integer from 3 to 15,
(ii) 40 to 97% by weight of a $C_1$-$C_8$ alkyl (meth)acrylate, a vinylaromatic compound having up to 20 carbon atoms, or mixtures thereof, and
(iii) 0 to 50% by weight of further monomers.

6. The aqueous binder composition according to claim 5, wherein $R^2$ is a $C_1$ to $C_4$ alkyl group.

7. The aqueous binder composition according to any one of claims 1 to 4, wherein the glass transition temperature of the emulsion copolymer (a) is less than 50°C.

**8.** The aqueous binder composition according to any one of claims 1 to 7, wherein the volume-average particle size of component (c) is < 200 nm.

**9.** The aqueous binder composition according to any one of claims 1 to 9, wherein the volume-average particle size of component (a) is < 500 nm.

**10.** The aqueous binder composition according to any one of claims 1 to 10, wherein the fraction of component (b) as a proportion of the total binder is between 10% and 35% (calculated as alkyd resin solids based on total binder solids).

**11.** The aqueous binder composition according to any one of claims 1 to 11, wherein the ratio of component (c) to component (a) is between 1:9 and 9:1 (calculated on the basis of alkyd resin solids to emulsion polymer solids).

**12.** The use of the binder composition according to any one of claims 1 to 12 as a component in coating materials.

**13.** The use of the binder composition according to any one of claims 1 to 12 as a component in high-gloss paints.

**14.** A coating material comprising a binder composition according to any one of claims 1 to 12.

**15.** The coating material according to claim 15, being a high-gloss paint having a gloss of more than 60 at 20° (° is angle of incidence).

**Revendications**

**1.** Composition aqueuse de liant, contenant

a) au moins un produit de polymérisation en émulsion contenant comme composants monomères un (méth) acrylate d'alkyle en $C_1$-$C_8$, un composé vinylaromatique ayant jusqu'à 20 atomes de carboné ou des mélanges de ceux-ci
b) au moins une résine alkyde hydrosoluble ayant une masse moléculaire moyenne en poids comprise entre 5 000 et 40 000 Da, ainsi que
c) au moins une résine alkyde ayant une masse moléculaire moyenne en poids supérieure à 100 000 Da, sous forme d'une émulsion aqueuse, **caractérisée en ce que** la teneur en matière solide du mélangé de (a), (b) et (c) est inférieure à 60 % en poids.

**2.** Composition aqueuse de liant selon la revendication 1, **caractérisée en ce que** la résine alkyde (b) présente un indice d'acide compris entré 30 et 65 mg de KOH/g.

**3.** Composition aqueuse de liant selon la revendication 1 ou 2, **caractérisée en ce que** les composés vinylaromatiques sont choisis dans le groupe constitué par le vinyltoluène, l'α- et le p-méthylstyrène, l'α-butylstyrène, le 4-n-butylstyrène, le 4-n-décylstyrène ou le styrène.

**4.** Composition aqueuse de liant selon la revendication 3, **caractérisée en ce que** le (méth)acrylate d'alkyle en $C_1$-$C_8$ est choisi dans le groupe constitué par le méthacrylate de méthyle,
l'acrylate de n-, iso- ou tert-butyle, l'acrylate, d'éthyle ou l'acrylate de 2-éthylhexyle ou des mélanges de ceux-ci.

**5.** Composition aqueuse de liant selon l'une quelconque des revendications 1 à 4, **caractérisée en ce que** le produit de polymérisation en émulsion (a) contient

(î) 3 à 15 % en poids de monomères de formulé I

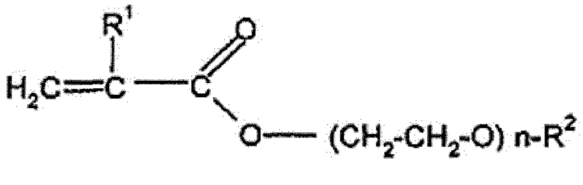

ou II

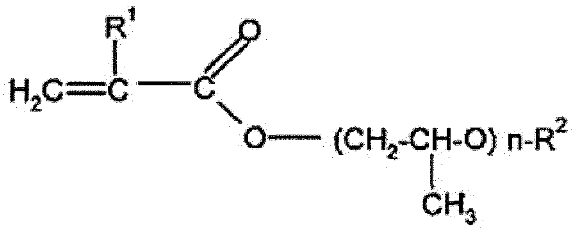

ou de mélanges de ceux-ci,
formules dans lesquelles $R^1$ représente un atome d'hydrogène ou un groupe méthyle, $R^2$ représente un atome d'hydrogène ou un groupe hydrocarboné aliphatique ou aromatique ayant de 1 à 20 atomes de carbone et n représente un nombre entier valant de 3 à 15
(îi) 40 à 97 % en poids d'un (méth)acrylate d'alkyle en $C_1$-$C_8$, d'un composé vinylaromatique ayant jusqu'à 20 atomes de carbone ou de mélanges de ceux-ci et
(iii) 0 à 50 % en poids d'autres monomères.

6. Composition aqueuse de liant selon la revendication 5, **caractérisée en ce que** $R^2$ représente un groupe alkyle en $C_1$-$C_4$.

7. Composition aqueuse de liant selon l'une quelconque des revendication 1 à 4, **caractérisés en ce que** la température de transition vitreuse du produit de copolymérisation en émulsion (a) est inférieure à 50 °C.

8. Composition aqueuse de liant selon l'une quelconque des revendications 1 à 7, **caractérisée en ce que** la taille de particule moyennée en volume du composant (c) est < 200 nm.

9. composition aqueuse de liant selon l'une quelconque des revendications 1 à 9, **caractérisée en ce que** la taille de particule moyennée en volume du compostant (a) est < 500 nm.

10. Composition aqueuse de liant selon l'une quelconque des revendications 1 à 10, **caractérisée en ce que** la proportion du composant (b) par rapport au liant total est comprise entre 10 et 35 % (calculée en résine alkyde solide par rapport à liant total solide).

11. Composition aqueuse de liant selon l'une quelconque des revendications 1 à 11, **caractérisée en ce que** le rapport du composant (c) au composant (a) est compris entre 1:9 et 9:1 (calculé en résine alkyde solide par rapport à produit de polymérisation en émulsion solide).

12. Utilisation de la composition de liant selon l'une quelconque des revendication 1 à 12, en tant que composant dans des peintures.

13. Utilisation de la composition de liant selon l'une quelconque des revendications 1 à 12, en tant que composant dans des laques très brillantes.

14. Peinture contenant une composition de liant selon l'une quelconque des revendication 1 à 12.

15. Peinture selon la revendication 15, **caractérisée en ce qu'**il s'agit d'une laque très brillante ayant un brillant supérieur à 60 sous 20° (° est l'angle d'incidence).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1382663 A
- EP 874875 A
- DE 3427647


### In der Beschreibung aufgeführte Nicht-Patentliteratur


- Ullmann's Encyclopedia of Industrial Chemistry. VCH, 1992, vol. A 21, 169
- **ZOSEL.** *Farbe und Lack,* 1976, vol. 82, 125-134
- Ullmanns Enzyklopädie der technischen Chemie. 1980, vol. 19, 17, 18
- **J..BRAND-RUP ; E.H. IMMERGUT.** Polymer Handbook. J. Wiley, 1989
- **G.R. MCGOWAN ; M.A. LANGHORST.** *J. Coll. And Interface Sci.,* 1982, vol. 89 (1), 92-104
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- **ÜBERBLICK.** *U.Poth,* 183 f